# EUROPEAN PATENT APPLICATION

(11) **EP 4 187 504 A1**
(43) Date of publication of application: **31.05.2023**
(21) Application number: 22190160.6
(22) Date of filing: 12.08.2022
(51) Int. Cl.: G06V 30/413, G06V 10/82

(54) **METHOD FOR TRAINING TEXT CLASSIFICATION MODEL, APPARATUS, STORAGE MEDIUM AND COMPUTER PROGRAM PRODUCT**

(30) Priority: 26.11.2021 CN 202111425339
(71) Applicant: BEIJING BAIDU NETCOM SCIENCE AND TECHNOLOGY CO. LTD., 100085 Beijing (CN)
(72) Inventor: LIU, Shanshan, Beijing, 100085 (CN); QIAO, Meina, Beijing, 100085 (CN); WU, Liang, Beijing, 100085 (CN); LYU, Pengyuan, Beijing, 100085 (CN); FAN, Sen, Beijing, 100085 (CN); ZHANG, Chengquan, Beijing, 100085 (CN); YAO, Kun, Beijing, 100085 (CN)
(74) Representative: Nederlandsch Octrooibureau

(57) **Abstract**

The present disclosure provides a method for training a text classification model, a method for recognizing text content and apparatuses thereof, and relates to the technical field of artificial intelligence, in particular to the technical fields of deep learning and computer vision, and may be applied to scenarios such as optical character recognition or text recognition. The method for training includes: acquiring a set of to-be-trained images, the set of to-be-trained images including at least one sample image; determining predicted position information and predicted attribute information of each text line in each sample image based on each sample image; and training to obtain the text classification model, based on the annotation position information and the annotation attribute information of each text line in each sample image, and the predicted position information and the predicted attribute information of each text line in each sample image, and the text classification model is used to detect attribute information of each text line in an to-be-recognized image. The method improves the accuracy of training, so that when attribute information of a text line is determined based on the text classification model, the reliability of classification is improved.

## Description

### TECHNICAL FIELD

The present disclosure relates to the technical field of artificial intelligence, in particular to the technical fields of deep learning and computer vision, and may be applied to scenarios such as optical character recognition (OCR) or text recognition, and more particularly, to a method for training a text classification model, an apparatus, a storage medium and a computer program product.

### BACKGROUND

Artificial intelligence (AI) technology is applied to recognition scenarios of text content on images, such as text content recognition scenarios of images, including taken photos, scanned books, contracts, documents and tickets, test papers, tables and the like. Specifically, when the AI technology is applied to recognize answer content in test papers, the recognition may be implemented based on a text detection method.

At present, when performing a detection on an image based on the text detection method, characters of the text in the image are usually detected.

However, there may be differences between different images, and performing a detection on an image based on a text detection method may lead to a technical problem of low detection accuracy.

### SUMMARY

The present disclosure provides a method for training a text classification model, a method and apparatus for recognizing text content, for improving detection accuracy.

According to a first aspect of the disclosure, a method for training a text classification model is provided, which includes:
acquiring a set of to-be-trained images, the set of to-be-trained images comprising at least one sample image, each text line in each sample image having annotation position information and annotation attribute information, and the attribute information indicating that text in the text line is handwritten text or printed text;
determining predicted position information and predicted attribute information of each text line in each sample image based on each sample image;
training to obtain the text classification model, based on the annotation position information and the annotation attribute information of each text line in each sample image, and the predicted position information and the predicted attribute information of each text line in each sample image, wherein the text classification model is used to detect attribute information of each text line in a to-be-recognized image.

According to a second aspect of the disclosure, an apparatus for training a text classification model, which includes:
a first acquisition unit, configured to acquire a set of to-be-trained images, the set of to-be-trained images comprising at least one sample image, each text line in each sample image having annotation position information and annotation attribute information, and the attribute information indicating that text in the text line is handwritten text or printed text;
a determination unit, configured to determine predicted position information and predicted attribute information of each text line in each sample image, based on each sample image; and
a training unit, configured to train to obtain the text classification model, based on the annotation position information and the annotation attribute information of each text line in each sample image, and the predicted position information and the predicted attribute information of each text line in each sample image, wherein the text classification model is used to detect attribute information of each text line in a to-be-recognized image..

According to a third aspect of the disclosure, a non-transitory computer readable storage medium storing computer instructions is provided, where the computer instructions when executed by a computer cause the computer to perform the method according to the first aspect. According to the fourth aspect of the disclosure, a computer program product is provided, which includes a computer program, where the computer program is stored in a readable storage medium, and at least one processor of the electronic device can read the computer program from the readable storage medium, and the at least one processor executes the computer program so that the electronic device executes the method according to the first aspect.

It should be understood that the content described in this section is not intended to identify key or important features of the embodiments of the present disclosure, nor is it intended to limit the scope of the present disclosure. Other features of the present disclosure will become readily understood from the following specification.

### BRIEF DESCRIPTION OF THE DRAWINGS

The accompanying drawings are used for better understanding of the present solution, and do not constitute a limitation to the present disclosure. In which:
Fig. 1 is a schematic diagram according to a first embodiment of the present disclosure;
Fig. 2 is a schematic diagram of a sample image according to an embodiment of the present disclosure;
Fig. 3 is a schematic diagram according to a second embodiment of the present disclosure;
Fig. 4 is a schematic diagram of a framework of a basic network model according to an embodiment of the present disclosure;
Fig. 5 is a schematic diagram according to a third embodiment of the present disclosure;
Fig. 6 is a schematic diagram according to a fourth embodiment of the present disclosure;
Fig. 7 is a schematic diagram according to a fifth embodiment of the present disclosure;
Fig. 8 is a schematic diagram according to a sixth embodiment of the present disclosure;
Fig. 9 is a schematic diagram according to a seventh embodiment of the present disclosure;
Fig. 10 is a schematic diagram according to an eighth embodiment of the present disclosure;
Fig. 11 is a schematic diagram according to a ninth embodiment of the present disclosure; and
Fig. 12 is a block diagram of an electronic device adapted to implement a method for training a text classification model, a method for determining a text type, and a method for recognizing text content according to embodiments of the present disclosure.

### DETAILED DESCRIPTION OF EMBODIMENTS

Example embodiments of the present disclosure are described below with reference to the accompanying drawings, where various details of the embodiments of the present disclosure are included to facilitate understanding, and should be considered merely as examples. Therefore, those of ordinary skills in the art should realize that various changes and modifications can be made to the embodiments described here without departing from the scope and spirit of the present disclosure. Similarly, for clearness and conciseness, descriptions of well-known functions and structures are omitted in the following description.

Artificial intelligence technology is applied to various image recognition scenarios, such as text content recognition scenarios of images. Moreover, types of the images are complex and diverse, for example, the images may be photos, contracts, bills, test papers, tables, etc.

In the related art, the following three methods are mainly used for text detection to obtain text content in images.

The first method (single character detection method) includes: detecting characters of text in an image, and perform splicing processing on the detected characters of text to obtain text lines, thus obtaining text content in the image.

The second method (textbox regression method) includes: acquiring text boxes in an image (the text boxes including text content), and performing regression processing on the text boxes using deep convolutional neural networks, thus obtaining text content in the image.

The third method (segmentation method) includes: considering pixels in a text area as a to-be-segmented target area, and detecting text in the target area, thus obtaining text content in the image.

However, when the first method is used, a support from a complex lining strategy of text boxes is needed, which is easy to cause a technical problem that a complete detection can not be achieved due to a long text box; when the second method is used, the method is strongly dependent on the text boxes. If the text boxes are inaccurate or incomplete, it is easy to cause a technical problem of low accuracy; or when the third method is used, if a text arrangement in the image is relatively complex, it is easy to cause a technical problem of low accuracy.

In addition, combined with the above analysis, it can be seen that images are diverse, and typesetting of text for the same type of images may also be quite different. For example, text in an image may include at least a printed text or may include at least a handwritten text. However, when text content in an image is acquired by using any of the three methods above, since a text type (that is, whether the text is a printed text or a handwritten text) is not distinguished, it may lead to a technical problem that an accuracy of the acquired text content is low.

In the present embodiment, an inventive concept is proposed: training to generate a text classification model, to detect a type of each text line in an image based on the trained text classification model, that is, to determine each text line as printed text or handwritten text, so as to acquire text content in the image by combining the type of each text line.

Based on the above inventive concept, the present disclosure provides a method for training a text classification model, a method for recognizing text content and apparatuses thereof, which is applied to the technical field of artificial intelligence, in particular to the technical fields of deep learning and computer vision, and may be applied to scenarios such as optical character recognition or text recognition, to improve the reliability and accuracy of text recognition.

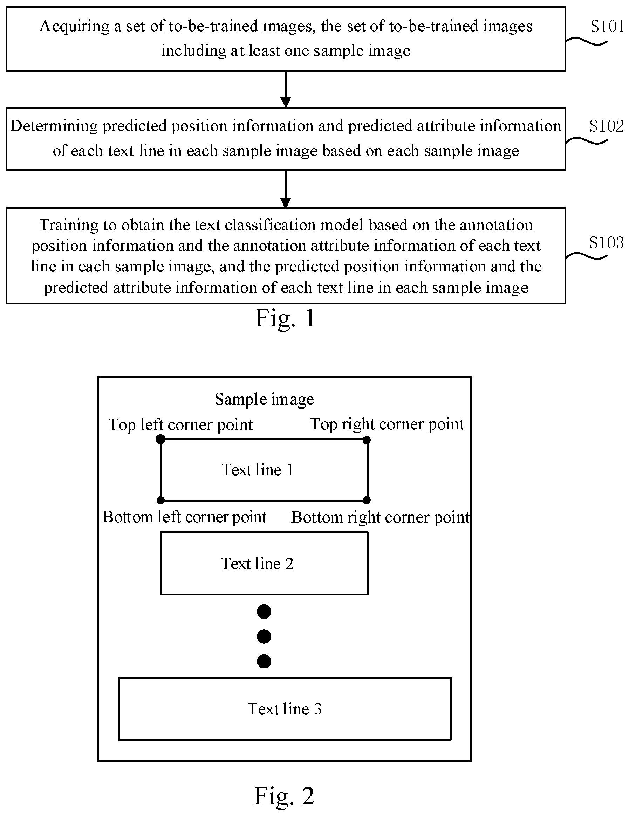

Fig. 1 is a schematic diagram according to a first embodiment of the present disclosure. As shown in Fig. 1, a method for training a text classification model according to embodiments of the present disclosure includes following steps.

S101 includes: acquiring a set of to-be-trained images, the set of to-be-trained images including at least one sample image, each text line in each sample image having annotation position information and annotation attribute information, and the attribute information indicating that text in the text line is handwritten text or printed text.

For example, an executing body of the present embodiment may be an apparatus for training a text classification model (hereinafter referred to as training apparatus), and the training apparatus may be a server (such as a cloud server, or a local server), or may be a computer, a terminal device, a processor, a chip or the like, which is not limited in the present embodiment.

The sample image may be understood as data used for training to obtain the text classification model. The number of sample images may be determined based on the scenario to which the text classification model is applied, or the like. For example, for a scenario where the text classification model is applied with relatively high reliability, a relatively large number of sample images may be used for training; however, for a scenario where the text classification model is applied with relatively low reliability, a relatively small number of sample images may be used for training.

The sample image includes at least one text line, that is, the sample image may include one text line, or may include multiple text lines. The text line refers to a text description line in the sample image. As shown in Fig. 2, the sample image includes text line 1, text line 2, to text line n. As shown in Fig. 2, dimensions of the text lines may be the same, or different.

The annotation position information refers to position information of the text line obtained by annotating with a position of the text line, such as pixel coordinates of four corner points of the text line.

For example, as shown in Fig. 2, the four corner points of the text line 1 are a top left corner point, a bottom left corner point, a top right corner point, a bottom right corner point, respectively. The pixel coordinate of the top left corner point refer to, based on a pixel coordinate system of the sample image, a position of the top left corner point in the pixel coordinate system. Correspondingly, the pixel coordinate of the bottom left corner point refer to a position of the bottom left corner point in the pixel coordinate system; the pixel coordinate of the top right corner point refer to a position of the top right corner point in the pixel coordinate system; and the pixel coordinate of the bottom right corner point refer to a position of the bottom right corner point in the pixel coordinate system.

The annotation attribute information refers to information about a type of text in the text line obtained by annotating that the text line is handwritten text or printed text.

It should be noted that the present embodiment does not limit a specific method for acquiring the set of to-be-trained images. For example, acquiring a set of to-be-trained images may be implemented using the following examples.

In an example, the training apparatus may be connected to an image collection apparatus and receive a set of to-be-trained images sent by the image collection apparatus.

In another example, the training apparatus may provide a tool for loading images, and a user may transmit a set of to-be-trained images to the training apparatus through the tool for loading images.

The tool for loading images may be an interface for connecting with external devices, such as an interface for connecting with other storage devices, through which the set of to-be-trained images transmitted by an external device may be acquired; the tool for loading images may alternatively be a display apparatus, for example, the training apparatus may enter an interface of loading image function on the display apparatus, and the user may import the set of to-be-trained images into the training apparatus through the interface.

Similarly, the present embodiment does not limit a method for annotating each text line with the annotation position information and the annotation attribute information, for example, annotation may be implemented manually or implemented based on artificial intelligence.

S102 includes: determining predicted position information and predicted attribute information of each text line in each sample image based on each sample image.

The predicted position information is a relative concept for the annotation position information, and refers to position information of the text line obtained based on prediction. That is, the annotation position information is position information obtained by annotating the text line, and the predicted position information is position information obtained by predicting for the text line. For example, the predicted position information may be the predicted pixel coordinates of the four corner points of the text line.

Similarly, the predicted attribute information is a relative concept for the annotation attribute information, and refers to attribute information of the text line obtained based on prediction. That is, the annotation attribute information is attribute information obtained by annotating the text line, and the predicted attribute information is attribute information obtained by predicting for the text line.

S103 includes: training to obtain the text classification model, based on the annotation position information and the annotation attribute information of each text line in each sample image, and the predicted position information and the predicted attribute information of each text line in each sample image, where the text classification model is used to detect attribute information of each text line in a to-be-recognized image.

For example, based on the annotation position information and the annotation attribute information of each text line in each sample image, and the predicted position information and the predicted attribute information of each text line in each sample image, a preset basic network model may be trained to obtain the text classification model.

Based on the above analysis, an embodiment of the present disclosure provides a method for training a text classification model, including: acquiring a set of to-be-trained images, the set of to-be-trained images including at least one sample image, each text line in each sample image having annotation position information and annotation attribute information, and the attribute information indicating that text in the text line is handwritten text or printed text; determining predicted position information and predicted attribute information of each text line in each sample image based on each sample image; and training to obtain the text classification model, based on the annotation position information and the annotation attribute information of each text line in each sample image, and the predicted position information and the predicted attribute information of each text line in each sample image, where the text classification model is used to detect attribute information of each text line in an to-be-recognized image. In the present embodiment, technical features that combined with the annotation position information and the annotation attribute information of each text line, as well as the predicted position information and the predicted attribute information of each text line, the text classification model is obtained by training, to detect the attribute information of each text line in the to-be-recognized image, are introduced. The text classification model is obtained by training by combining the position information and the attribute information, so that the attribute information and the position information are mutually constrained, avoiding the disadvantage of low accuracy caused by deviating from the position information to determine the attribute information, and improving the reliability and accuracy of training. Therefore, when the attribute information of the text line is determined based on the text classification model, a technical effect of improving the accuracy and reliability of classification is achieved. Further, in a recognition scenario, a technical effect of improving the accuracy and reliability of acquired text content is achieved.

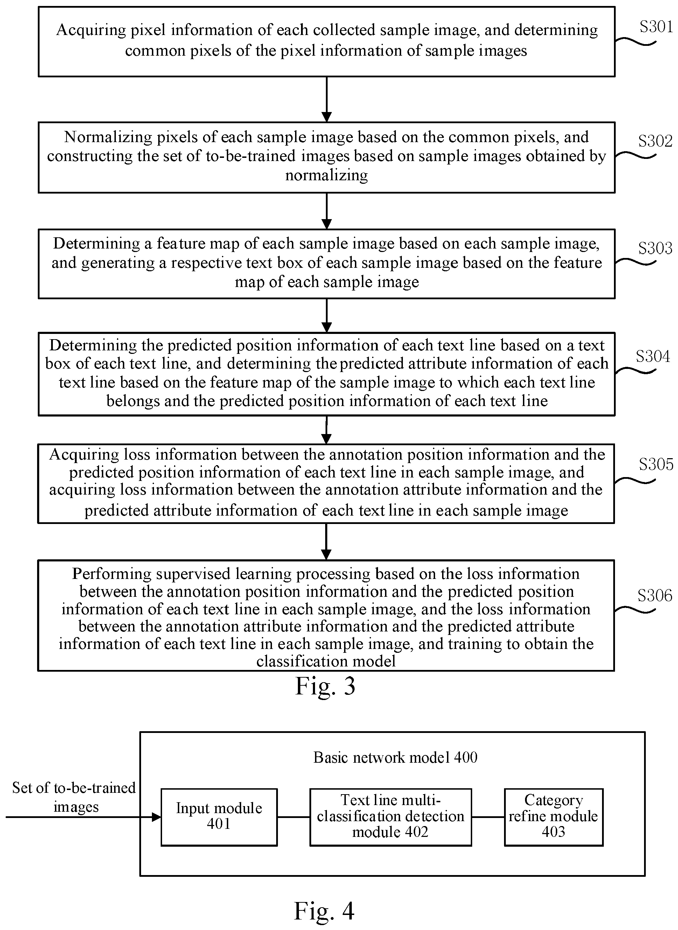

Fig. 3 is a schematic diagram according to a second embodiment of the present disclosure. As shown in Fig. 3, the method for training a text classification model according to embodiments of the present disclosure includes following steps.

S301 includes acquiring pixel information of each collected sample image, and determining common pixels of the pixel information of sample images.

Content in the present embodiment same as that in the previous embodiment will be omitted in the present embodiment. For example, the executing body, the sample image, etc. in the present embodiment may be described with reference to the previous embodiment.

If the number of sample images is N, that is, the text classification model is obtained by training based on N sample images, then this step may be understood as: acquiring pixel information of each sample image in the N sample images, and determining given pixel information included in each of the N sample images, and the given pixel information is the common pixels, that is, the common pixels are given pixels included in each of the N sample images.

S302 includes: normalizing pixels of each sample image based on the common pixels, and constructing the set of to-be-trained images based on the normalized sample images.

Each text line in each sample image is annotated with position information and attribute information, and the attribute information indicates that text in the text line is handwritten text or printed text.

For each sample image in the N sample images, the sample image may be normalized based on the common pixels. The normalization in the present embodiment refers to normalization processing in a broad sense, which may be understood as a processing operation performed on each sample image based on the common pixels. For example, the normalization may be a subtract operation on the common pixels, that is, for each sample image, the common pixels may be removed from each sample image, thereby obtaining the set of to-be-trained images.

It should be noted that, in the present embodiment, through the normalization (such as a subtraction of the common pixel) in the above solution, the complexity of training may be reduced, training costs may be reduced, and at the same time, it may highlight differences in individual characteristics, improve the reliability of training, and achieve technical effects of meeting differentiated scenario requirements.

In some embodiments, the sample images have the same size. For example, the size of the sample images may be preset, and the size may be determined based on a training speed, and sample images that do not conform to the size may be preprocessed (such as cropping) based on the size, so that the sample images in the set of to-be-trained images are all of the same size, thereby improving a training efficiency.

S303 includes: determining a feature map of each sample image based on each sample image, and generating text boxes of each sample image based on the feature map of each sample image, where the text boxes include text content in text lines in the sample image.

For example, a target detection algorithm (stage) may be used to sample each sample image to obtain a sample map of each sample image (in order to be distinguished from a map obtained by resampling below, the sample map obtained by this sampling is called a first sample map). For different sample images, the target detection algorithm used may be different. For an implementation principle of the target detection algorithm, reference may be made to the related art, and detailed description thereof will be omitted here.

For each sample map, multiple times of down-sampling processing may be performed on the sample map to obtain a sample map of the each sample map (similarly, in order to be distinguished from other maps obtained by sampling, the map obtained by this sampling is called a second sample map).

For example, taking four times of down-sampling processing as an example, a first down-sampling processing is performed on a first sample map A0 to obtain a sample map A1, and then down-sampling processing is performed on the sample map A1 to obtain a sample map A2, then down-sampling processing is performed on the sample map A2 to obtain a sample map A3, then down-sampling processing is performed on the sample map A3 to obtain a sample map A4 (the sample map A4 is the second sample map corresponding to the first sample map AO).

The sample map obtained by each down-sampling represents features of the sample image, but includes information of different dimensions. Therefore, the number of times of down-sampling may be determined based on the dimensions for representing the features of the sample image. The features of the sample image include color, texture, position, pixel and so on.

A feature pyramid may be constructed based on the second sample map obtained by each down-sampling, and the feature pyramid may be up-sampled to obtain a feature map of the same size as each sample image.

Convolution processing and classification processing may be performed on the feature map of each sample image in sequence to obtain a threshold map and a probability map of the sample image, and a binary map of each sample image may be determined based on the threshold map and the probability map, so that based on the binary map, each text box of the sample image may be generated.

S304 includes: determining the predicted position information of each text line based on a text box of each text line, and determining the predicted attribute information of each text line based on the feature map of the sample image to which each text line belongs and the predicted position information of each text line.

It should be noted that, in the present embodiment, by combining the feature map to generate the text box to determine the predicted position information based on the text box, the predicted position information may have high accuracy and reliability, avoiding a deviation between actual position information of the text line and the predicted position information. In addition, the predicted attribute information is determined by combining the feature map and the predicted position information, so that the predicted attribute information and the text line have a high degree of fit. Therefore, a technical effect of improving the accuracy and reliability of the obtained predicted attribute information is achieved.

In some embodiments, the determining the predicted position information of each text line based on a text box of each text line, may include the following steps.

Step 1: acquiring corner point position information of each corner point of the text box of each text line.

Step 2: determining center position information of the text box of each text line based on corner point position information of corner points of each text line, and determining the center position information of the text box of each text line as the predicted position information of each text line.

Combining the above analysis, it can be seen that for the text box of any text line, the text box may have four corner points, and each corner point has a pixel coordinate of each corner in the pixel coordinate system of the sample image, and the pixel coordinates may be the corner position information.

Correspondingly, after acquiring the corner position information corresponding to the four corners of the text box, the center position information of the text box may be obtained by calculating based on the corner position information of the four corners. The center position information may be understood as coordinates of a center point of the text box.

That is, in the present embodiment, the coordinates of the center point of each text box may be determined as the predicted position information of the text line corresponding to each text box, so as to avoid the deviation of the predicted position information, thereby achieving the technical effect of improving the accuracy and reliability of the predicted position information.

In some embodiments, the determining the predicted attribute information of each text line based on the feature map of the sample image to which each text line belongs and the predicted position information of each text line, may include the following steps:
Step 1: determining initial attribute information of each text line based on the predicted position information of each text line.

For example, after the predicted position information of each text line is determined, the initial attribute information of each text line may be predicted based on the predicted position information.

The "initial" in the initial attribute information is used to distinguish the annotation attribute information and the predicted attribute information, which may be understood as roughly determined attribute information of the text line, and the predicted attribute information may be understood as relatively accurate attribute information of the text line.

It should be noted that, in the present embodiment, by combining the predicted position information to determine the initial attribute information of each text line, the initial attribute information may be used to indicate that the text line of the predicted position information is printed text or handwritten text, so that the initial attribute information is a relatively accurate indication of the attribute information of the text line, and the disadvantage of wrong text line indication may be avoided.

Step 2: determining a foreground area and a background area of each text line based on the feature map of the sample image to which each text line belongs, and performing correction processing on the initial attribute information of each text line based on the foreground area and the background area of each text line, to obtain the predicted attribute information of each text line.

The foreground area and the background area are relative concepts. For a text line, an area including text in the text line is the foreground area, and an area not including the text is the background area. For example, a gap between two adjacent words is the background area.

In the present embodiment, correction processing may be performed on the initial attribute information of each text line through the foreground area and the background area of each text line, so as to perform correction processing on the initial attribute information in combination with relevant information on whether the area includes text. Therefore, the predicted attribute information of each text line is highly matched with the text in each text line, thereby achieving the technical effect of improving the accuracy and reliability of the predicted attribute information of each text line.

In some embodiments, the foreground area includes foreground pixel information, and the background area includes background pixel information; the performing correction processing on the initial attribute information of each text line based on the foreground area and the background area of each text line, to obtain the predicted attribute information of each text line, may include the following sub-steps.

Sub-step 1: performing background area suppression processing on the background area of each text line, based on the foreground pixel information and the background pixel information of each text line, to obtain pixel information of suppressed background of each text line.

The foreground pixel information and the background pixel information are relative concepts. For each text line, the foreground pixel information of the text line and the background pixel information of the text line are overall pixel information of the text line. That is, the pixel information of the text line includes the foreground pixel information and the background pixel information of the text line.

Relatively speaking, the foreground pixel information and the background pixel information of the text line may be determined based on gray values of pixels of the text line. For example, a gray value of each pixel of the text line is compared with a preset gray threshold interval. If the gray value of a pixel is in the gray threshold interval, the pixel is a foreground pixel, and information corresponding to the pixel is the foreground pixel information; if the gray value of a pixel is not in the gray threshold interval, the pixel is a background pixel, and information corresponding to the pixel is the background pixel information.

In some embodiments, a pixel classification map may be constructed based on the foreground pixel information and the background pixel information. For example, in the pixel classification map, foreground pixels are identified with 1, and background pixels are identified with 0.

Correspondingly, when suppression processing is performed on the background area based on the pixel classification map, it may be implemented in combination with the feature map. For example, convolution processing may be performed on the pixel classification map to obtain a convolution matrix, and the convolution matrix may be multiplied with the feature map, then pixels identified with 0 may be removed, thereby suppressing the background area.

Sub-step 2: performing correction processing on the initial attribute information of each text line based on the foreground pixel information and the pixel information of suppressed background of each text line, to obtain the predicted attribute information of each text line.

Combining the above analysis, this sub-step may be understood as: after performing suppression processing on the background area of the pixel classification map of each text line, a suppressed pixel classification map may be obtained, and based on the suppressed pixel classification map of each text line, correction processing may be performed on the initial attribute information of each text line to obtain the predicted attribute information of each text line.

In the present embodiment, by combining the background area suppression processing, the background pixel information in the background area may be suppressed, and the foreground pixel information in the foreground area may be enhanced, so as to perform correction processing on the initial attribute information, therefore, the technical effect of improving the accuracy and reliability of the determined predicted attribute information of each text line is achieved.

S305 includes: acquiring loss information between the annotation position information and the predicted position information of each text line in each sample image, and acquiring loss information between the annotation attribute information and the predicted attribute information of each text line in each sample image.

S306 includes: performing supervised learning processing, based on the loss information (in order to be distinguished from loss information in the following text, it may be called first loss information) between the annotation position information and the predicted position information of each text line in each sample image, and the loss information (in order to be distinguished from the loss information in the previous text, it may be called second loss information) between the annotation attribute information and the predicted attribute information of each text line in each sample image, and training to obtain the text classification model.

For example, a first loss threshold set in advance for the loss information between the annotation position information and the predicted position information may be acquired, and a second loss threshold set in advance for the loss information between the annotation attribute information and the predicted attribute information may be acquired. The first loss threshold and the second loss threshold are different values.

The supervised learning processing is performed by combining the first loss information, the first loss threshold, the second loss information and the second loss threshold, that is, the second loss threshold and the second loss information are supervised based on the first loss information and the first loss threshold, and vice versa, the first loss threshold and the first loss information are supervised based on the second loss information and the second loss threshold, so as to achieve a technical effect of improving the effectiveness and reliability of training by means of jointly supervised learning.

In some embodiments, training may be implemented based on a basic network model, that is, the basic network model is trained to train parameters of the basic network model (such as a convolution parameters), so as to obtain the text classification model.

Here, a framework of a basic network model 400 may refer to Fig. 4. As shown in Fig. 4, the framework of the basic network model 400 may include an input module 401, a text line multi-classification detection module 402, and a category refine module 403.

The input module 401 may be configured to acquire a set of to-be-trained images including sample images.

The text line multi-classification detection module 402 may be configured to determine a text box, a feature map, and a pixel classification map of each text line based on the principles in the foregoing method embodiments.

The text line multi-classification detection module 402 may be a neural network model (backbone), and may adopt a resnet18 structure.

The category refine module 403 may be configured to obtain a text classification model based on the principles in the above method embodiments. For example, network parameters of the text line multi-classification detection module 402 and the category refine module 403 may be adjusted based on joint supervised learning, so as to obtain the text classification model.

The category refine module 403 may adopt a multi-layer convolutional network structure, such as a four-layer convolutional network structure.

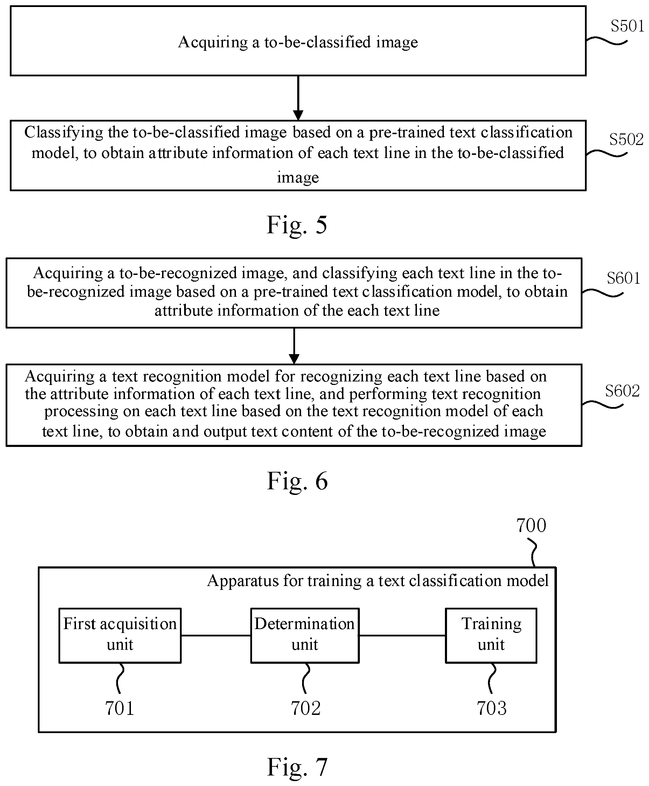

Fig. 5 is a schematic diagram according to a third embodiment of the present disclosure. As shown in Fig. 5, a method for determining a text type according to an embodiment of the present disclosure includes following steps.

S501 includes: acquiring a to-be-classified image.

S502: classifying the to-be-classified image based on a pre-trained text classification model, to obtain attribute information of each text line in the to-be-classified image.

The attribute information indicates that text in the text line is handwritten text or printed text, and the text classification model is generated by training based on the method for training a text classification model described in any one of the above embodiments.

It should be noted that an executing body of this embodiment of the present disclosure may be the same as or different from the executing body of the method for training a text classification model in the foregoing embodiments, which is not limited in the present embodiment.

Based on the above analysis, it can be seen that the text classification model obtained by training based on the above method for training a text classification model has high accuracy and reliability. Therefore, when classifying the to-be-classified image based on the text classification model, the technical effect of improving the accuracy and reliability of classification may be achieved.

Fig. 6 is a schematic diagram according to a fourth embodiment of the present disclosure. As shown in Fig. 6, a method for recognizing text content according to an embodiment of the present disclosure includes following steps.

S601 includes: acquiring a to-be-recognized image, and classifying each text line in the to-be-recognized image based on a pre-trained text classification model, to obtain attribute information of the each text line. The attribute information indicates that text in the text line is handwritten text or printed text, and the text classification model is generated by training based on the method for training a text classification model described in any one of the above embodiments.

Similarly, an executing body of this embodiment of the present disclosure may be the same as or different from the executing body of the method for training a text classification model in the foregoing embodiments, which is not limited in the present embodiment.

S602 includes: acquiring a text recognition model for recognizing each text line based on the attribute information of each text line, and performing text recognition processing on each text line based on the text recognition model of each text line, to obtain and output text content of the to-be-recognized image.

In the present embodiment, by first combining the text classification model to determine whether the text line is printed text or handwritten text, and recognizing and outputting the text content of the to-be-recognized image through the text recognition model corresponding to printed text or the text recognition model corresponding to handwritten text, a technical effect of improving the reliability and accuracy of recognition may be achieved.

In some embodiments, the text recognition model includes a handwritten text recognition model and a printed text recognition model; the text recognition model of a text line whose attribute information is handwritten text is the handwritten text recognition model; and the text recognition model of a text line whose attribute information is printed text is the printed text recognition model.

For example, if the to-be-recognized image is an image of test paper, the image includes handwritten text (such as text of answers in the test paper) and printed text (such as text of test questions in the test paper), and the handwritten text and the printed text in the image are classified by the text classification model, to select the corresponding text recognition model flexibly, such as selecting the handwritten text recognition model to recognize the handwritten text, and selecting the printed text recognition model to recognize the printed text, so as to achieve a technical effect of improving the accuracy and reliability of automatic marking the test paper.

Fig. 7 is a schematic diagram according to a fifth embodiment of the present disclosure. As shown in Fig. 7, an apparatus 700 for training a text classification model according to an embodiment of the present disclosure includes following units:
first acquisition unit 701, configured to acquire a set of to-be-trained images, the set of to-be-trained images including at least one sample image, each text line in each sample image having annotation position information and annotation attribute information, and the attribute information indicating that text in the text line is handwritten text or printed text;
determination unit 702, configured to determine predicted position information and predicted attribute information of each text line in each sample image, based on each sample image; and
training unit 703, configured to train to obtain the text classification model, based on the annotation position information and the annotation attribute information of each text line in each sample image, and the predicted position information and the predicted attribute information of each text line in each sample image, where the text classification model is used to detect attribute information of each text line in a to-be-recognized image.

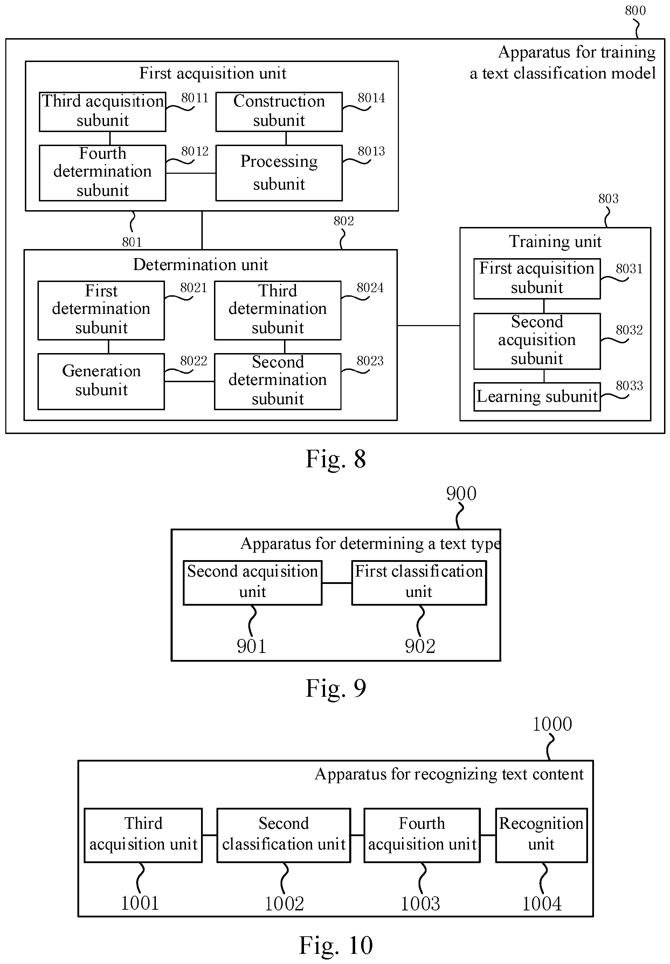

Fig. 8 is a schematic diagram according to a sixth embodiment of the present disclosure. As shown in Fig. 8, an apparatus 800 for training a text classification model according to an embodiment of the present disclosure includes:
first acquisition unit 801, configured to acquire a set of to-be-trained images, the set of to-be-trained images including at least one sample image, each text line in each sample image having annotation position information and annotation attribute information, and the attribute information indicating that text in the text line is handwritten text or printed text.

From Fig. 8 it can be seen that, in some embodiments, the first acquisition unit 801 includes:
third acquisition subunit 8011, configured to acquire pixel information of each collected sample image;
fourth determination subunit 8012, configured to determine common pixels of the pixel information of sample images;
processing subunit 8013, configured to normalize pixels of each sample image based on the common pixels;
construction subunit 8014, configured to construct the set of to-be-trained images based on the normalized sample images; and
determination unit 802, configured to determine predicted position information and predicted attribute information of each text line in each sample image based on each sample image.

From Fig. 8 it can be seen that, in some embodiments, the determination unit 802 includes:
first determination subunit 8021, configured to determine a feature map of each sample image based on each sample image;
generation subunit 8022, configured to generate a respective text box of each sample image based on the feature map of each sample image, where the text box include text content in text lines in the sample image; and
second determination subunit 8023, configured to determine the predicted position information of each text line based on a text box of each text line.

In some embodiments, the second determination subunit 8023 includes:
an acquisition module, configured to acquire corner point position information of each corner point of the text box of each text line;
a third determination module, configured to determine center position information of the text box of each text line based on corner point position information of corners of each text line; and
a fourth determination module, configured to determine the center position information of the text box of each text line as the predicted position information of each text line; and
third determination subunit 8024, configured to determine the predicted attribute information of each text line based on the feature map of the sample image to which each text line belongs and the predicted position information of each text line.

In some embodiments, the third determination subunit 8024 includes:
an acquisition module, configured to determine initial attribute information of each text line based on the predicted position information of each text line;
a third determination module, configured to determine a foreground area and a background area of each text line based on the feature map of the sample image to which each text line belongs; and
a correction module, configured to perform correction processing on the initial attribute information of each text line based on the foreground area and the background area of each text line, to obtain the predicted attribute information of each text line.

In some embodiments, the foreground area includes foreground pixel information, and the background area includes background pixel information; and the correction module includes:
a suppression submodule, configured to perform background area suppression processing on the background area of each text line, based on the foreground pixel information and the background pixel information of each text line, to obtain suppressed background pixel information of each text line;
a correction submodule, configured to perform correction processing on the initial attribute information of each text line, based on the foreground pixel information and the suppressed background pixel information of each text line, to obtain the predicted attribute information of each text line; and
training unit 803, configured to train to obtain the text classification model, based on the annotation position information and the annotation attribute information of each text line in each sample image, and the predicted position information and the predicted attribute information of each text line in each sample image, where the text classification model is used to detect attribute information of each text line in a to-be-recognized image.

From Fig. 8 it can be seen that, in some embodiments, the training unit 803 includes:
first acquisition subunit 8031, configured to acquire loss information between the annotation position information and the predicted position information of each text line in each sample image;
second acquisition subunit 8032, configured to acquire loss information between the annotation attribute information and the predicted attribute information of each text line in each sample image; and
learning subunit 8033, configured to perform supervised learning processing, based on the loss information between the annotation position information and the predicted position information of each text line in each sample image, and the loss information between the annotation attribute information and the predicted attribute information of each text line in each sample image, and train to obtain the text classification model.

Fig. 9 is a schematic diagram according to a seventh embodiment of the present disclosure. As shown in Fig. 9, an apparatus 900 for classifying a text type according to an embodiment of the present disclosure includes:
second acquisition unit 901, configured to acquire a to-be-classified image; and
first classification unit 902, configured to classify the to-be-classified image based on a pre-trained text classification model, to obtain attribute information of each text line in the to-be-classified image.

The attribute information indicates that text in the text line is handwritten text or printed text, and the text classification model is generated by training based on the apparatus for training described in any one of the above embodiments.

Fig. 10 is a schematic diagram according to an eighth embodiment of the present disclosure. As shown in Fig. 10, an apparatus 1000 for recognizing text content according to an embodiment of the present disclosure includes:
third acquisition unit 1001, configured to acquire a to-be-recognized image;
second classification unit 1002, configured to classify each text line in the to-be-recognized image based on a pre-trained text classification model, to obtain attribute information of the each text line, where the attribute information indicates that text in the text line is handwritten text or printed text, and the text classification model is generated by training based on the apparatus for training described in any one of the above embodiments;
fourth acquisition unit 1003, configured to acquire a text recognition model for recognizing each text line based on the attribute information of each text line; and
recognition unit 1004, configured to perform text recognition processing on each text line based on the text recognition model of each text line, to obtain and output text content of the to-be-recognized image.

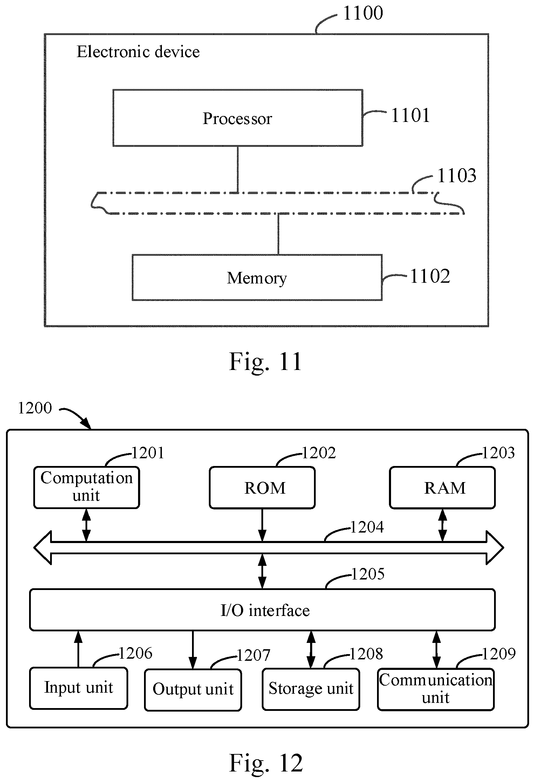

Fig. 11 is a schematic diagram according to a ninth embodiment of the present disclosure. As shown in Fig. 11, an electronic device 1100 in the present disclosure may include: a processor 1101 and a memory 1102.

The memory 1102 is used for storing programs; the memory 1102 may include volatile memories, for example, a random-access memory (RAM), such as a static random-access memory (SRAM), a double data rate synchronous dynamic random access memory (DDR SDRAM); the memory may also include non-volatile memories, such as a flash memory. The memory 1102 is used for storing computer programs (such as application programs, functional modules, etc. for implementing the above methods), computer instructions, and the like. The computer programs, computer instructions, and the like may be stored in one or more memories 1102 in partitions. In addition, the computer programs, computer instructions, data and the like may be called by the processor 1101.

The computer programs, computer instructions, and the like may be stored in one or more memories 1102 in partitions. In addition, the computer programs, computer instructions, data and the like may be called by the processor 1101.

The processor 1101 is configured to execute the computer programs stored in the memory 1102 to implement the steps in the methods involved in the foregoing embodiments.

For details, reference may be made to the relevant descriptions in the foregoing method embodiments.

The processor 1101 and the memory 1102 may be independent structures, or may be an integrated structure integrated together. When the processor 1101 and the memory 1102 are independent structures, the memory 1102 and the processor 1101 may be coupled and connected through a bus 1103.

The electronic device in the present embodiment may execute the technical solutions in the foregoing methods, and the implementation processes and technical principles thereof are the same, and detailed description thereof will be omitted.

According to an embodiment of the present disclosure, the present disclosure also provides an electronic device, a readable storage medium, and a computer program product.

According to an embodiment of the present disclosure, the present disclosure also provides a computer program product, and the computer program product includes: a computer program, the computer program is stored in a readable storage medium, and at least one processor in the electronic device may read the computer program from the readable storage medium, and the at least one processor executes the computer program so that the electronic device executes the solution provided by any of the foregoing embodiments.

Fig. 12 illustrates a schematic block diagram of an example electronic device 1200 that may be adapted to implement embodiments of the present disclosure. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processors, cellular phones, smart phones, wearable devices, and other similar computing apparatuses. The parts shown herein, their connections and relationships, and their functions are merely examples, and are not intended to limit the implementation of the present disclosure described and/or claimed herein.

As shown in Fig. 12, the device 1200 includes a computation unit 1201, which may perform various appropriate actions and processing, based on a computer program stored in a read-only memory (ROM) 1202 or a computer program loaded from a storage unit 1208 into a random access memory (RAM) 1203. In the RAM 1203, various programs and data required for the operation of the device 1200 may also be stored. The computation unit 1201, the ROM 1202, and the RAM 1203 are connected to each other through a bus 1204. An input/output (I/O) interface 1205 is also connected to the bus 1204.

A plurality of parts in the device 1200 are connected to the I/O interface 1205, including: an input unit 1206, for example, a keyboard and a mouse; an output unit 1207, for example, various types of displays and speakers; the storage unit 1208, for example, a disk and an optical disk; and a communication unit 1209, for example, a network card, a modem, or a wireless communication transceiver. The communication unit 1209 allows the device 1200 to exchange information/data with other devices over a computer network such as the Internet and/or various telecommunication networks.

The computation unit 1201 may be various general-purpose and/or dedicated processing components having processing and computing capabilities. Some examples of the computation unit 1201 include, but are not limited to, central processing unit (CPU), graphics processing unit (GPU), various dedicated artificial intelligence (AI) computing chips, various computation units running machine learning model algorithms, digital signal processors (DSP), and any appropriate processors, controllers, microcontrollers, etc. The computation unit 1201 performs the various methods and processes described above, such as a method for training a text classification model, a method for determining a text type, and a method for recognizing text content. For example, in some embodiments, the method for training a text classification model, the method for determining a text type, and the method for recognizing text content may be implemented as computer software programs, which are tangibly included in a machine readable medium, such as the storage unit 1208. In some embodiments, part or all of the computer programs may be loaded and/or installed on the device 1200 via the ROM 1202 and/or the communication unit 1209. When the computer programs are loaded into the RAM 1203 and executed by the computation unit 1201, one or more steps of the method for training a text classification model, the method for determining a text type, and the method for recognizing text content described above may be performed. Alternatively, in other embodiments, the computation unit 1201 may be configured to perform the method for training a text classification model, the method for determining a text type, and the method for recognizing text content by any other appropriate means (for example, by means of firmware).

Various embodiments of the systems and techniques described above herein may be implemented in a digital electronic circuit system, an integrated circuit system, a field programmable gate array (FPGA), an application specific integrated circuit (ASIC), an application specific standard product (ASSP), a system on chip (SOC), a load programmable logic device (CPLD), computer hardware, firmware, software, and/or a combination thereof. These various embodiments may include: being implemented in one or more computer programs, the one or more computer programs may be executed and/or interpreted on a programmable system including at least one programmable processor, the programmable processor may be a special-purpose or general-purpose programmable processor, and may receive data and instructions from a storage system, at least one input device, and at least one output device, and transmitting data and instructions to the storage system, the at least one input device, and the at least one output device.

The program code for implementing the methods of the present disclosure may be written in any combination of one or more programming languages. These program codes can be provided to the processor or controller of a general-purpose computer, a special-purpose computer or other programmable data processing device, so that the program code, when executed by the processor or controller, enables the functions/operations specified in the flowchart and/or block diagram to be implemented. The program code can be fully executed on the machine, partially executed on the machine, partially executed on the machine and partially executed on the remote machine as a separate software package, or completely executed on the remote machine or server.

In the context of the present disclosure, a machine-readable medium may be a tangible medium that may contain or store a program for use by or in combination with an instruction execution system, apparatus, or device. The machine-readable medium may be a machine-readable signal medium or a machine-readable storage medium. Machine readable media may include, but is not limited to, electronic, magnetic, optical, electromagnetic, infrared, or semiconductor system, apparatus, or device, or any suitable combination of the foregoing. More specific examples of machine-readable storage media may include electrical connections based on one or more lines, portable computer disks, hard disks, random access memory (RAM), read only memory (ROM), erasable programmable read only memory (EPROM or flash memory), optical fibers, compact disk read only memory (CD-ROM), optical storage devices, magnetic storage devices, or any suitable combination of the above.

In order to provide interaction with the user, the systems and techniques described herein may be implemented on a computer having: a display device (e.g., a CRT (cathode ray tube) or LCD (liquid crystal display) monitor) for displaying information to the user; and a keyboard and a pointing device (e.g., a mouse or trackball) through which a user can provide input to a computer. Other kinds of devices can also be used to provide interaction with users. For example, the feedback provided to the user may be any form of sensor feedback (e.g., visual feedback, auditory feedback, or tactile feedback); and the input from the user can be received in any form (including acoustic input, voice input or tactile input).

The systems and techniques described herein may be implemented in a computing system including a background component (e.g., as a data server), or a computing system including a middleware component (e.g., an application server) or a computing system including a front-end component (e.g., a user computer with a graphical user interface or a web browser through which a user can interact with embodiments of the systems and techniques described herein), or a computing system including such a back-end component, a middleware component, or any combination of front-end components. The components of the system may be interconnected by digital data communication (e.g., a communication network) in any form or medium. Examples of communication networks include local area networks (LANs), wide area networks (WANs), and the Internet.

The computer system may include a client and a server. The client and server are generally far away from each other and usually interact through a communication network. A client server relationship is generated by computer programs running on the corresponding computers and having a client-server relationship. The server can be a cloud server, also known as a could computing server, or a cloud host, which is a host product in the cloud computing service system to solve the defects of difficult management and weak service scalability in services of the traditional physical host and virtual private server (VPS). The server may alternatively be a distributed system server or a blockchain server.

It should be understood that steps can be reordered, added, or deleted using the various forms of processes shown above. For example, the steps described in the present disclosure can be performed in parallel, in sequence, or in different orders. As long as the desired results of the technical solution of the present disclosure can be achieved, which is not limited here.

The above specific embodiments do not constitute restrictions on the scope of the present disclosure. Those skilled in the art should understand that various modifications, combinations, sub combinations and substitutions can be made according to design requirements and other factors. Any modification, equivalent replacement and improvement made within the spirit and principles of this disclosure shall be included in the scope of protection of this disclosure.

## Claims

1. A method for training a text classification model, the method comprising:
acquiring (S101) a set of to-be-trained images, the set of to-be-trained images comprising at least one sample image, each text line in each sample image having annotation position information and annotation attribute information, and the attribute information indicating that text in the text line is handwritten text or printed text;
determining (S102) predicted position information and predicted attribute information of each text line in each sample image based on each sample image; and
training (S103) to obtain the text classification model, based on the annotation position information and the annotation attribute information of each text line in each sample image, and the predicted position information and the predicted attribute information of each text line in each sample image, wherein the text classification model is used to detect attribute information of each text line in a to-be-recognized image.

2. The method according to claim 1, wherein the determining predicted position information and predicted attribute information of each text line in each sample image, based on each sample image comprises:
determining (S303) a feature map of each sample image based on each sample image, and generating a respective text box of each sample image based on the feature map of each sample image, wherein the text box comprise text content in text lines in the sample image; and
determining (S304) the predicted position information of each text line based on the text box of each text line, and determining the predicted attribute information of each text line based on the feature map of the sample image to which each text line belongs and the predicted position information of each text line.

3. The method according to claim 2, wherein the determining the predicted attribute information of each text line based on the feature map of the sample image to which each text line belongs and the predicted position information of each text line comprises:
determining initial attribute information of each text line based on the predicted position information of each text line; and
determining a foreground area and a background area of each text line based on the feature map of the sample image to which each text line belongs, and performing correction processing on the initial attribute information of each text line based on the foreground area and the background area of each text line, to obtain the predicted attribute information of each text line.

4. The method according to claim 3, wherein the foreground area comprises foreground pixel information, and the background area comprises background pixel information; the performing correction processing on the initial attribute information of each text line based on the foreground area and the background area of each text line, to obtain the predicted attribute information of each text line, comprises:
performing background area suppression processing on the background area of each text line, based on the foreground pixel information and the background pixel information of each text line, to obtain suppressed background pixel information of each text line; and
performing correction processing on the initial attribute information of each text line, based on the foreground pixel information and the suppressed background pixel information of each text line, to obtain the predicted attribute information of each text line.

5. The method according to any one of claims 2-4, wherein the determining the predicted position information of each text line based on a text box of each text line, comprises:
acquiring corner point position information of each corner point of the text box of each text line; and
determining center position information of the text box of each text line based on corner point position information of corners of each text line, and determining the center position information of the text box of each text line as the predicted position information of each text line.

6. The method according to any one of claims 1-5, wherein the training to obtain the text classification model, based on the annotation position information and the annotation attribute information of each text line in each sample image, and the predicted position information and the predicted attribute information of each text line in each sample image, comprises:
acquiring loss information between the annotation position information and the predicted position information of each text line in each sample image, and acquiring loss information between the annotation attribute information and the predicted attribute information of each text line in each sample image; and
performing supervised learning processing, based on the loss information between the annotation position information and the predicted position information of each text line in each sample image, and the loss information between the annotation attribute information and the predicted attribute information of each text line in each sample image, and training to obtain the text classification model.

7. The method according to any one of claims 1-6, wherein the acquiring a set of to-be-trained images comprises:
acquiring (S301) pixel information of each collected sample image, and determining common pixels of the pixel information of sample images; and
normalizing (S302) pixels of each sample image based on the common pixels, and constructing the set of to-be-trained images based on sample images obtained by the normalizing.

8. The method according to any one of claims 1 to 7, comprising:
acquiring (S501) a to-be-classified image, and classifying (S502) the to-be-classified image based on the text classification model, to obtain attribute information of each text line in the to-be-classified image,
wherein the attribute information indicates that text in the text line is handwritten text or printed text.

9. The method according to any one of claims 1 to 7, comprising:
acquiring (S601) a to-be-recognized image, classifying each text line in the to-be-recognized image based on the text classification model, to obtain attribute information of each text line of the to-be-recognized image, wherein the attribute information indicates that text in the text line is handwritten text or printed text.
acquiring (S602) a text recognition model for recognizing each text line based on the attribute information of each text line, and performing text recognition processing on each text line based on the text recognition model of each text line, to obtain and output text content of the to-be-recognized image.

10. The method according to claim 9, wherein the text recognition model comprises a handwritten text recognition model and a printed text recognition model; a text recognition model of a text line having attribute information of handwritten text is the handwritten text recognition model; and a text recognition model of a text line having attribute information of printed text is the printed text recognition model.

11. An apparatus for training a text classification model, the apparatus comprising:
a first acquisition unit (701), configured to acquire a set of to-be-trained images, the set of to-be-trained images comprising at least one sample image, each text line in each sample image having annotation position information and annotation attribute information, and the attribute information indicating that text in the text line is handwritten text or printed text;
a determination unit (702), configured to determine predicted position information and predicted attribute information of each text line in each sample image, based on each sample image; and
a training unit (703), configured to train to obtain the text classification model, based on the annotation position information and the annotation attribute information of each text line in each sample image, and the predicted position information and the predicted attribute information of each text line in each sample image, wherein the text classification model is used to detect attribute information of each text line in a to-be-recognized image.

12. The apparatus according to claim 11, wherein the determination unit comprises:
a first determination subunit (8021), configured to determine a feature map of each sample image based on each sample image;
a generation subunit (8022), configured to generate a respective text box of each sample image based on the feature map of each sample image, wherein the text box comprises text content in text lines in the sample image; and
a second determination subunit (8023), configured to determine the predicted position information of each text line based on a text box of each text line; and
a third determination subunit (8024), configured to determine the predicted attribute information of each text line based on the feature map of the sample image to which each text line belongs and the predicted position information of each text line.

13. The apparatus according to claim 12, wherein the third determination subunit comprises:
an acquisition module, configured to determine initial attribute information of each text line based on the predicted position information of each text line; and
a third determination module, configured to determine a foreground area and a background area of each text line based on the feature map of the sample image to which each text line belongs; and
a correction module, configured to perform correction processing on the initial attribute information of each text line based on the foreground area and the background area of each text line, to obtain the predicted attribute information of each text line, wherein the foreground area comprises foreground pixel information, and the background area comprises background pixel information; the correction module preferably comprises:
a suppression submodule, configured to perform background area suppression processing on the background area of each text line based on the foreground pixel information and the background pixel information of each text line, to obtain suppressed background pixel information of each text line; and
a correction submodule, configured to perform correction processing on the initial attribute information of each text line based on the foreground pixel information and the suppressed background pixel information of each text line, to obtain the predicted attribute information of each text line.

14. A non-transitory computer readable storage medium storing computer instructions, wherein the computer instructions are used to cause the computer to perform the method according to any one of claims 1-10.

15. A computer program product, comprising a computer program, wherein the computer program, when executed by a processor, implements the method according to any one of claims 1-10.
